# EUROPÄISCHE PATENTSCHRIFT

(11) **EP 0 766 614 B1**
(45) Veröffentlichungstag und Bekanntmachung des Hinweises auf die Patenterteilung: **07.06.2000**
(21) Anmeldenummer: 96907387.3
(22) Anmeldetag: 08.03.1996
(51) Int. Cl.: B29B 7/76

(54) **VORRICHTUNG ZUM MISCHEN VON WENIGSTENS ZWEI CHEMISCH REAKTIVEN KUNSTSTOFFKOMPONENTEN**
DEVICE FOR MIXING AT LEAST TWO CHEMICALLY REACTIVE PLASTIC COMPONENTS
DISPOSITIF PERMETTANT DE MELANGER AU MOINS DEUX COMPOSANTS PLASTIQUES CHIMIQUEMENT REACTIFS

(30) Priorität: 24.04.1995 DE 19515039
(43) Veröffentlichungstag der Anmeldung: 09.04.1997
(73) Patentinhaber: Krauss-Maffei Kunststofftechnik GmbH, 80997 München (DE)
(72) Erfinder: EIDENMÜLLER, Siegfried, D-85256 Ramelsbach (DE)
(74) Vertreter: Rucker, Bernd, Dipl.-Ing.
(86) Internationale Anmeldenummer: EP9600988
(87) Internationale Veröffentlichungsnummer: WO9633852

(56) Entgegenhaltungen:
- EP-A- 0 009 114
- EP-A- 0 257 221
- DE-A- 3 108 636
- DE-U- 8 915 329
- US-A- 3 189 325

## Beschreibung

Die Erfindung bezieht sich auf eine Vorrichtung zum Mischen von wenigstens zwei reaktiven Kunststoffkomponenten gemäß Oberbegriff des Patentanspruchs 1.

Eine Vorrichtung dieser Art ist aus dem deutschen Gebrauchsmuster DE-U-89 15 329 bekannt, bei dem der Reinigungskolben einen in einer Ringnut angeordneten Dichtungsring aufweist. Mit diesem Dichtungsring ist die Oberfläche der Beruhigungskammer zwar gut zu reinigen, es kann jedoch nicht ausgeschlossen werden, daß zwischen der Oberfläche der Beruhigungskammer und der Oberfläche des Reinigungskolbens ausreagiertes Kunststoffmaterial eindringt und zur Verklebung des Reinigungskolbens führt. Desgleichen besteht insbesondere bei einer ungleichförmigen Verteilung von ausreagiertem Kunststoffmaterial die Gefahr, daß es zu metallischem Kontakt und demgemäß zum Fressen zwischen Kolben und Zylinderrohr kommt.

Es ist aus der DE-AS 28 38 798 bereits bekannt, zum Verhindern des Festfressens des Steuerkolbens Vertiefungen in dem den Zulauf der Kunststoffkomponenten steuernden Kolben anzuordnen, wobei in den Vertiefungen ausreagiertes Material einen metallischen Kontakt zwischen Kolben und Zylinderwandung verhindern soll. Mit dieser Maßnahme allein lassen sich jedoch Verklebungen des Kolbens in der Zylinderwandung schwer lösen, so daß in diesem Falle so starke Losreißkräfte erforderlich werden können, daß es zu Beschädigungen und zum Bruch bzw. Abreißen des Reinigungskolbens kommen kann.

Bei dem aus der EP-A-0 257 221 bekannten Mischkopf zum Herstellen eines chemisch reagierenden Gemisches wird der Steuerkolben durch einen einen zuzsätzlichen Bauaufwand erfordernden Drehantrieb in Drehung oder, über einen Exzenterantrieb, in eine oszillierende Bewegung versetzt, wobei zusätzlich zum Steuerkolben auch der Hydraulikkolben mitbewegt (Drehung , Oszillation) werden muß, mit dem der Steuerkolben in seine Betriebspositionen verschiebbar ist.

Bei der aus der DE-A- 31 08 636 bekannten Vorrichtung zum Erzeugen eines Reaktionsgemisches aus mindestens zwei Kunststoffkomponenten wird eine Verklebung des Steuerkolbens mit der Mischkammerwand dadurch verhindert, daß der Querschnitt des Steuerkolbens so gewählt ist, daß die Berührungsfläche zwischen dem Steuerkolben und der Mischkammerwand auf ein zur Führung des Steuerkolbens erforderliches Minimum verringert ist. Da die Führung dabei maßgeblich durch schmale Führungsflächen erzielt wird, die entlang von Mantellinien des Steuerkolbens verlaufen, stellen sich nach längerer Betriebsdauer ungleichförmige Verschleißbereiche an der Mischkammerwand ein.

Aus der US-A- 3,189,325 ist es ferner bekannt, den reversierbaren Steuerkolben in der Stellung, in der die in die Mischkammer mündenden Komponentenzulauföffnungen freigegeben werden, mittels eines gesonderten Drehantriebes in Rotation zu versetzen, so daß die mit Umlenkflächen versehene, zwischen den Komponentenzulauföffnungen gelegene Spitze des Steuerkolbens, die Komponenten nach Art eines Quirls verwirbelt. Diese Einrichtung erfordert durch den gesonderten Drehantrieb einen verhältnismäßig großen Bauaufwand. Im weiteren kann durch die zwischen den Komponentenzulauföffnungen gelegene Spitze des Steuerkolbens nicht der intensive Vermischungseffekt erreicht werden, wie dies bei Reaktionsgießmaschinen (z.B. Polyurethananlagen) der Fall ist, bei denen die Komponenten unter sehr hohem Druck aufeinandertreffen.

Der Erfindung liegt die Aufgabe zugrunde, bei einem Reinigungskolben der eingangs genannten Art die Neigung zur Verklebung und die erforderliche Losreißkraft zu verringern.

Dies Aufgabe wird gemäß der Erfindung durch die im Anspruch 1 definierte Vorrichtung gelöst. Zweckmäßige Weiterbildungen der Erfindung sind in den abhängigen Ansprüchen beschrieben.

Die Erfindung geht von der Erkenntnis aus, daß durch die spiralförmige Belegung des Reinigungskolbens mit Abstandsmaterial zum einen die mögliche Verklebungsfläche reduziert ist und zum anderen keine ungleichförmige Belegung des Spaltes zwischen Kolben und Zylinderrohr mit klebendem ausreagiertem Kunststoffmaterial erfolgen kann. Die Gefahr, daß der Kolben durch einseitiges radiales Wegdrücken in unmittelbaren metallischen Kontakt mit dem Zylinderrohr kommt, ist damit ausgeschlossen. Vor allem wird jedoch durch die Einleitung einer Drehbewegung eine quer zum axialen Kolbenhub gerichtete Scherkraftkomponente erzielt, durch die zwischen dem Kolben und dem Zylinderrohr befindliche klebende Substanzen besonders wirkungsvoll gelöst werden können. Im weiteren ergibt sich der Vorteil, daß durch die bei jedem Hub stattfindende Drehung des Reinigungskolbens stets neue Partien der Oberflächen von Kolben und Zylinder gegenüberliegen, so daß die Bildung von axial verlaufenden Riefen und Ablagerungen mit Sicherheit ausgeschlossen werden kann.

Vorzugsweise wird als Abstandsmaterial ausreagiertes Kunststoffmaterial verwendet. Dieses Material bildet sich durch einsickern von noch nicht ausreagiertem Kunststoffgemisch über den zwischen Kolben und Zylinderrohr befindlichen Spalt. Das Kunststoffgemisch setzt sich in den Vertiefungen fest und bewirkt durch sein Anquellen beim Ausreagieren eine sichere, einen metallischen Kontakt zwischen Kolben und Zylinderfläche ausschließende Abstandshalterung.

Grundsätzlich ist es auch möglich, in die Vertiefungen vor dem Einbau des Reinigungskolbens andere Abstandsmaterialien als ausreagiertes Kunststoffgemisch einzubringen. Hierfür können Dichtungsmaterialien geeignet sein, die hinsichtlich des zu verarbeitenden Kunststoffgemisches nicht nur nicht zur Verklebung neigen, sondern aufgrund stark abstoßender Wirkung Verklebungen auch in unmittelbar an das Dichtungsmaterial angrenzenden Bereichen ausschließen.

In einer bevorzugten Ausführungsform ist der Reinigungskolben frei drehbar an der Kolbenstange des Hydraulikkolbens befestigt, wodurch sich das durch die spiralförmige Anordnung der Vertiefungen hervorgerufene Drehmoment besonders effizient auf etwaige Verklebungsbereiche auswirken kann. Dreh-Reibungsverluste an den Dichtungsstellen der Kolbenstange und des Hydraulikkolbens sind dadurch ausgeschlossen.

Die Erfindung wird nachstehend anhand der Zeichnung näher erläutert. Es zeigen:
- Fig. 1: in schematischer Darstellung einen Schnitt durch einen Mischkopf zum Mischen zweier reaktiver Kunststoffkomponenten,
- Fig. 2: die Teildarstellung des Mischkopfes gemäß der Schnittlinie II-II in Fig. 1,
- Fig. 3: die Einzeldarstellung eines Reinigungskolbens mit einer im Vergleich zu Fig. 1 anderen Art von spiralförmig angeordneten Vertiefungen und
- Fig. 4: die Einzeldarstellung eines Reinigungskolbens mit einer weiteren Art von Vertiefungen.

Der dargestellte Mischkopf enthält eine zylindrische Mischkammer 1, in die eine Zulaufleitung 2 für die Kunststoffkomponente A und eine Zulaufleitung 3 für die Kunststoffkomponente B einmündet. Injektionsöffnungen 4 und 5 der Zulaufleitungen 2 und 3 werden von einem Mischkammerkolben 6 auf- und zugesteuert, der in der Mischkammer 1 reversierbar geführt ist. Der Mischkammerkolben 6 befindet sich in der Rezirkulationsstellung in der die Kunststoffkomponenten A und B über Mischkammerkolben 6 ausgebildete Rezirkulationsnuten 7 und 8 in zu den Komponententanks (nicht dargestellt) führende Rücklaufleitungen 9 und 10 zurückgeleitet werden. In der Mischstellung (nicht dargestellt) befindet sich der Mischkammerkolben in zurückgezogener Stellung in der die Injektionsöffnungen 4 und 5 freigegeben sind, so daß die Kunststoffkomponenten A und B unter hohem Druck in der Mischkammer 1 aufeinandertreffen und sich dort innig durchmischen. Das so gebildete reaktive Kunststoffkomponentengemisch strömt über die Mischkammeraustrittsöffnung 11 in die anschließende Beruhigungskammer 12 und gelangt über deren Auslaßöffnung 13 in die Form (nicht dargestellt).

In der Beruhigungskammer 12 ist ein Reinigungskolben 14 reversierbar angeordnet, der sich in der Zeichnung in vorderster Stellung befindet, in der am Ende einer Spritzperiode das Kunststoffkomponentengemisch aus der Beruhigungskammer 12 ausgestoßen ist, wobei die Innenwandung der Beruhigungskammer 12 nahezu restlos von reaktivem Kunststoffkomponentengemisch gereinigt wird.

Der Reinigungskolben 14 ist mit enger Toleranz in der Beruhigungskammer 12 eingepaßt und weist auf seiner zylindrischen Mantelfläche Vertiefungen 15a in Form von spiralförmig verlaufenden Nuten auf. Die Vertiefungen sind mit Abstandsmaterial (nicht dargestellt) gefüllt, das aus ausreagiertem Kunststoffkomponentengemisch bestehen kann, das sich nach und nach während des Betriebes in den Vertiefungen ansammelt und in diesen festsetzt. Das Abstandsmaterial kann auch aus gesondertem Material bestehen, das vor dem Einbau des Reinigungskolbens in die Vertiefungen eingebracht wird.

Der Reinigungskolben 14 ist an einer Kolbenstange 16 frei drehbar befestigt, die mittels eines doppeltwirkenden Hydraulikkolbens 17 hin und herbewegbar ist. Grundsätzlich kann das Drehlager auch zwischen der Kolbenstange 16 und dem Hydraulikkolben 17 angeordnet sein.

Die Fig. 3 zeigt im vergrößerten Maßstab eine andere Ausführungsform eines Reinigungskolbens 14, bei dem die Vertiefungen 15b die Form von in spiralförmigen Linien 18 angeordneten Grübchen haben.

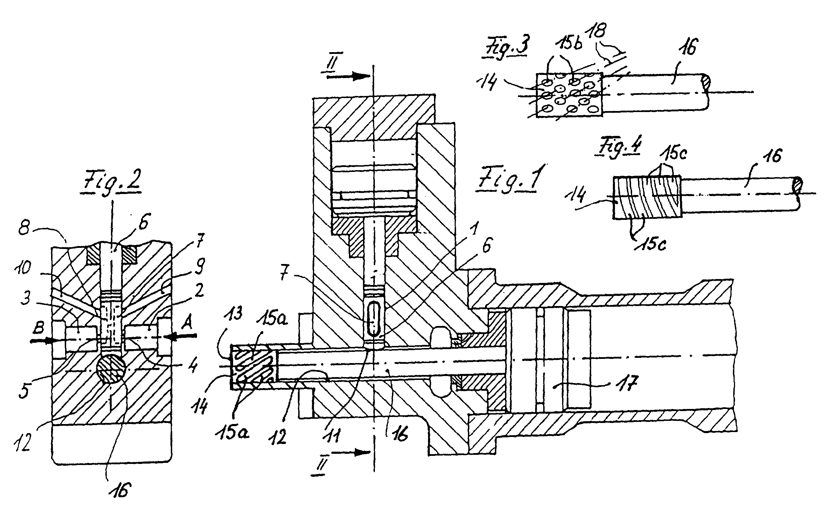

Die Fig. 4 zeigt im vergrößerten Maßstab einen Reinigungskolben 14 mit Vertiefungen 15c in Form von Spiralnuten, die im Vergleich zu den Spiralnuten des Reinigungskolbens 14 nach Fig. 1 einen wesentlich geringeren Spiralwinkel aufweisen. Damit wird erreicht, daß bei einem axialen Hub eine Mantellinie der Innnenwandung der Beruhigungskammer mehrfach von den überdeckend angeordneten, mit Abstandsmaterial gefüllten spiralförmigen Vertiefungen 15c überstrichen wird.

## Patentansprüche

1. Vorrichtung zum Mischen von wenigstens zwei chemisch reaktiven Kunststoffkomponenten unter hohem Druck, mit einer zylindrischen Mischkammer (1), in welche die Kunststoffkomponenten injiziert werden, wobei zum Austragen von restlichem Kunststoffgemisch innerhalb der Mischkammer (1) ein reversierbarer Kolben (6) angeordnet ist, und mit einer zylindrischen Beruhigungskammer (12), welche sich an die Mischkammer (6) anschließt und in einem Winkel von vorzugsweise 90° zur Längsachse der Mischkammer (6) verläuft, wobei in der Beruhigungskammer (12) ein reversierbarer Reinigungskolben (14) zum Austragen des reaktiven Kunststoffgemisches aus der Beruhigungskammer (12) angeordnet ist, **dadurch gekennzeichnet**, daß der Reinigungskolben (14) auf seiner zylindrischen Mantelfläche Vertiefungen (15a,15b,15c) ausgebildet hat, die mit Abstandsmaterial gefüllt sind und die Spiralförmig auf der Mantelfläche des Reinigungskolbens (14) angeordnet sind, so daß bei einer axialen Bewegung des Reinigungskolbens (14) dieser in Drehung versetzt wird.

2. Vorrichtung nach Anspruch 1, **dadurch gekennzeichnet**, daß das Abstandsmaterial aus ausreagiertem Kunststoffgemisch besteht.

3. Vorrichtung nach Anspruch 1, **dadurch gekennzeichnet**, daß das Abstandsmaterial aus vor dem Einbau des Reinigungskolbens (14) in die Vertiefungen (15a,15b,15c) eingebrachtem Dichtungsmaterial besteht.

4. Vorrichtung nach Anspruch 3, **dadurch gekennzeichnet**, daß das Dichtungsmaterial in Bezug auf das zu verarbeitende Kunststoffgemisch eine stark abstoßende Wirkung aufweist.

5. Vorrichtung nach einem der Ansprüche 1 bis 4, **dadurch gekennzeichnet**, daß die Vertiefungen (15a,15c) durchgehend spiralförmig angeordnet sind.

6. Vorrichtung nach einem der Ansprüche 1 bis 4, **dadurch gekennzeichnet**, daß die Vertiefungen (15b) aus einzelnen, jeweils auf einer Spirallinie (18) angeordneten Grübchen bestehen.

7. Vorrichtung nach einem der Ansprüche 1 bis 6, **dadurch gekennzeichnet**, daß der Reinigungskolben (14) frei drehbar an einer Kolbenstange (16) befestigt ist.

## Claims

1. Device for mixing at least two chemically reactive plastic components under high pressure with a cylindrical mixing chamber (1) into which the plastic components are injected, a reciprocating piston (6) being arranged within the mixing chamber (1) for discharging residual plastic mixture, and with a cylindrical calming chamber (12) which is attached to the mixing chamber (6) and extends at an angle preferably of 90° to the longitudinal axis of the mixing chamber (6), wherein a reciprocating cleaning piston (14) is arranged in the calming chamber (12) for discharging the reactive plastic mixture from the calming chamber (12), characterised in that the cleaning piston (14) is provided with recesses (15a, 15b, 15c) on its cylindrical surface, which are filled with spacer material and are arranged spirally on the surface of the cleaning piston (14) in such a way that the cleaning piston (14) is set into rotation during an axial movement thereof.

2. Device according to claim 1, characterised in that the spacer material consists of fully reacted plastic mixture.

3. Device according to claim 1, characterised in that the spacer material consists of sealing material which is introduced into the recesses (15a, 15b, 15c) prior to installation of the cleaning piston (14).

4. Device according to claim 3, characterised in that the sealing material has a markedly repelling effect with respect to the plastic mixture to be processed.

5. Device according to one of claims 1 to 4, characterised in that the recesses (15a, 15c) are arranged in a continuously spiral manner.

6. Device according to one of claims 1 to 4, characterised in that the recesses (15b) consist of individual pits arranged in each case on a spiral line (18).

7. Device according to one of claims 1 to 6, characterised in that the cleaning piston (14) is fastened freely rotatably on a piston rod (16).

## Revendications

1. Dispositif permettant de mélanger sous haute pression au moins deux composants plastiques chimiquement réactifs, comportant une chambre cylindrique de mélange (1) dans laquelle on injecte les composants plastiques, un piston (6) à mouvement réversible étant disposé à l'intérieur de la chambre de mélange (1) pour évacuer le mélange plastique résiduel, et comportant une chambre cylindrique de modération (12) qui se raccorde à la chambre de mélange (6) et fait un angle valant de préférence 90° par rapport à l'axe longitudinal de la chambre de mélange (6), un piston de nettoyage (14) à mouvement réversible étant disposé dans la chambre de modération (12) pour évacuer hors de la chambre de modération (12) le mélange plastique réactif, caractérisé par le fait que sur la surface latérale cylindrique du piston de nettoyage (14) sont formés des évidements (15a, 15b, 15c) qui sont remplis d'un matériau d'écartement et sont disposés en forme de spirale sur la surface latérale du piston de nettoyage (14).

2. Dispositif selon la revendication 1, caractérisé par le fait que le matériau d'écartement est constitué du mélange plastique ayant réagi.

3. Dispositif selon la revendication 1, caractérisé par le fait que le matériau d'écartement est constitué d'un matériau d'étanchéité rapporté dans les évidements (15a, 15b, 15c) avant mise en place du piston de nettoyage (14).

4. Dispositif selon la revendication 3, caractérisé par le fait que le matériau d'étanchéité présente une forte action répulsive à l'égard du mélange plastique à traiter.

5. Dispositif selon l'une des revendication 1 à 4, caractérisé par le fait que les évidements (15a, 15c) sont disposés en spirale continue.

6. Dispositif selon l'une des revendications 1 à 4, caractérisé par le fait que les évidements (15b) sont constitués de différents creux, disposés chacun sur une ligne spirale (18).

7. Dispositif selon l'une des revendications 1 à 6, caractérisé par le fait que le piston de nettoyage (14) est fixé sur une tige de piston (16) avec liberté de rotation.
